# EUROPEAN PATENT APPLICATION

(11) **EP 3 276 939 A1**
(43) Date of publication of application: **31.01.2018**
(21) Application number: 16771761.0
(22) Date of filing: 25.03.2016
(51) Int. Cl.: H04N 5/225, B60R 1/00, H04N 5/232

(54) **IMAGE CAPTURING DEVICE, IMAGE CAPTURING SYSTEM, AND VEHICLE**

(30) Priority: 27.03.2015 JP 2015067467; 24.04.2015 JP 2015089762
(71) Applicant: Kyocera Corporation, Kyoto-shi, Kyoto 612-8501 (JP)
(72) Inventor: NAKATA, Takatoshi, Kyoto-shi Kyoto 612-8501 (JP); SEKI, Hideya, Kyoto-shi Kyoto 612-8501 (JP)
(74) Representative: Schwabe - Sandmair - Marx
(86) International application number: PCT/JP2016/001768
(87) International publication number: WO 2016/157873

(57) **Abstract**

An imaging apparatus, imaging system, and vehicle reduce the effect of D/A conversion of a digital image signal and the effect during transmission of an analog image signal. An imaging apparatus (13) includes an image processor (22) that generates a first digital image, a DA converter (23) that converts the first digital image to an analog image and outputs the analog image, an I/O interface (14) that receives reference information indicating an image quality characteristic value of a second digital image generated in accordance with the analog image, and a controller (25) that controls operation of the image processor (22) and adjusts an image quality characteristic of the first digital image so that the image quality characteristic value of the second digital image becomes closer to a predetermined target value.

## Description

### CROSS-REFERENCE TO RELATED APPLICATIONS

This application claims priority to and the benefit of Japanese Patent Application No. 2015-067467 filed March 27, 2015, and Japanese Patent Application No. 2015-089762 filed April 24, 2015, the entire contents of which are incorporated herein by reference.

### TECHNICAL FIELD

This disclosure relates to an imaging apparatus, an imaging system, and a vehicle.

### BACKGROUND

In recent years, exposure and white balance have been controlled in cameras mounted in vehicles, for example. To improve image visibility by controlling the exposure and white balance of on-vehicle cameras in accordance with the surrounding environment, patent literature PTL 1 discloses a technique for correcting the white balance and controlling the amount of incident light in accordance with whether the vehicle's light source is on.

A method for outputting a signal upon determining that an optical detector of a camera is malfunctioning when image data from a CCD camera has not changed a predetermined number of times is also known (for example, see patent literature PTL 2).

### CITATION LIST

### Patent Literature

PTL 1: JP 2005-159918 A
PTL 2: JP H11-287549 A

### SUMMARY

### (Solution to Problem)

An imaging apparatus according to an embodiment of this disclosure includes an image processor configured to generate a first digital image; a DA converter configured to convert the first digital image to an analog image and output the analog image; an I/O interface configured to receive reference information indicating an image quality characteristic value of a second digital image generated in accordance with the analog image; and a controller configured to control operation of the image processor and to adjust an image quality characteristic of the first digital image so that the image quality characteristic value of the second digital image becomes closer to a predetermined target value.

An imaging system according to an embodiment of this disclosure includes an imaging apparatus configured to generate a first digital image, convert the first digital image to an analog image, and output the analog image; and a display apparatus configured to receive the analog image, convert the analog image to a second digital image, and output reference information indicating an image quality characteristic value of the second digital image to the imaging apparatus, such that the imaging apparatus adjusts an image quality characteristic of the first digital image so that the image quality characteristic value of the second digital image becomes closer to a predetermined target value.

A vehicle according to an embodiment of this disclosure includes an imaging apparatus configured to generate a first digital image, convert the first digital image to an analog image, and output the analog image, and a display apparatus configured to receive the analog image, convert the analog image to a second digital image, and output information indicating an image quality characteristic value of the second digital image to the imaging apparatus, such that the imaging apparatus adjusts an image quality characteristic of the first digital image so that the image quality characteristic value of the second digital image becomes closer to a predetermined target value.

### BRIEF DESCRIPTION OF THE DRAWINGS

In the accompanying drawings:
FIG. 1 is an overhead view of a vehicle that includes a camera system according to Embodiment 1;
FIG. 2 illustrates an example of the imaging area of the imaging apparatus in FIG. 1;
FIG. 3 is a block diagram illustrating the configuration of the camera system in FIG. 1;
FIG. 4 is a flowchart illustrating operations of the camera system in FIG. 1;
FIG. 5 is a first flowchart illustrating operations of a camera system according to Embodiment 2;
FIG. 6 is a second flowchart illustrating operations of a camera system according to Embodiment 2;
FIG. 7 is a third flowchart illustrating operations of a camera system according to Embodiment 2;
FIG. 8 is a flowchart illustrating operations of a display apparatus according to Embodiment 2;
FIG. 9 is a functional block diagram of an imaging apparatus and a display apparatus according to Embodiment 3;
FIG. 10 illustrates a test pattern image output by the imaging apparatus in FIG. 9;
FIG. 11 is a flowchart of operations of the imaging apparatus in FIG. 9; and
FIG. 12 is a chart illustrating the relationship between the comparisons made by the imaging apparatus in FIG. 9 and the location of an anomaly.

### DETAILED DESCRIPTION

Embodiments of this disclosure are described below, with reference to the drawings.

### (Embodiment 1)

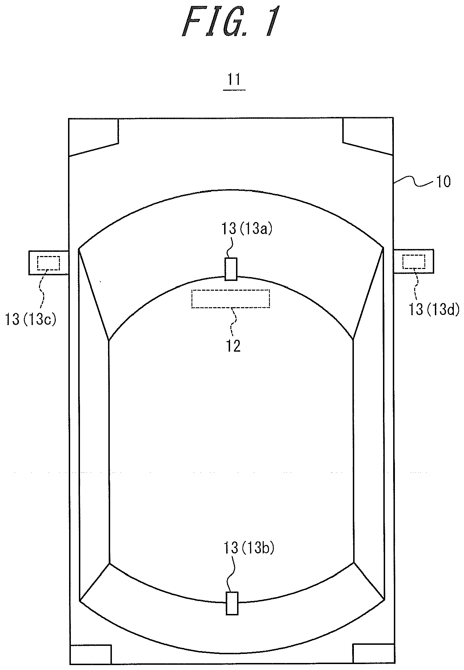

First, a camera system 11 (imaging system) included in a vehicle 10, which is a vehicle according to Embodiment 1 of this disclosure, is described with reference to FIG. 1. The camera system 11 includes a display apparatus 12 and at least one imaging apparatus 13. The camera system 11 in this embodiment includes four imaging apparatuses 13. The four imaging apparatuses 13 are distinguished by being referred to as a front camera 13a, a rear camera 13b, a left-side camera 13c, and a right-side camera 13d.

The front camera 13a is arranged in the vehicle 10 to allow imaging of the surrounding area in front of the vehicle 10. The rear camera 13b is arranged in the vehicle 10 to allow imaging of the surrounding area behind the vehicle 10. The left-side camera 13c is, for example, arranged facing perpendicularly downward in the left side view mirror to allow imaging of the surrounding area on the left side of the vehicle 10. The right-side camera 13d is, for example, arranged facing perpendicularly downward in the right side view mirror to allow imaging of the surrounding area on the right side of the vehicle 10. The display apparatus 12 is arranged at a position visible from the driver's seat.

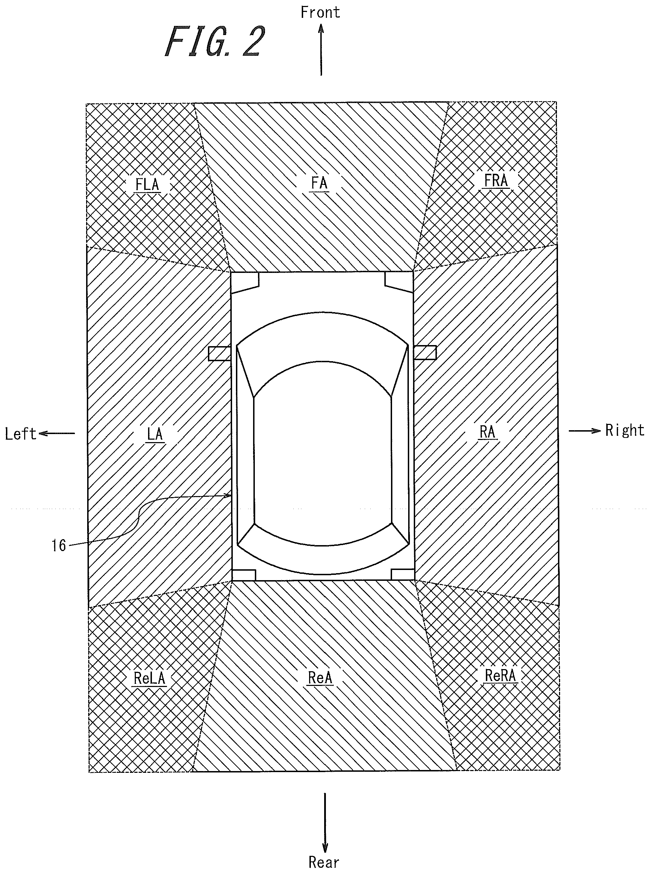

Each imaging apparatus 13 is provided with a lens having a wide field of view, such as a fisheye lens, and is capable of wide-angle shooting of the surrounding area of the vehicle 10. For example, as illustrated in FIG. 2, the imaging area of the front camera 13a includes a front area FA, a front left area FLA, and a front right area FRA of the vehicle 10. The imaging area of the rear camera 13b includes a rear area ReA, a rear left area ReLA, and a rear right area ReRA of the vehicle 10. The imaging area of the left-side camera 13c includes a left area LA, the front left area FLA, and the rear left area ReLA of the vehicle 10. The imaging area of the right-side camera 13d includes a right area RA, the front right area FRA, and the rear right area ReRA of the vehicle 10.

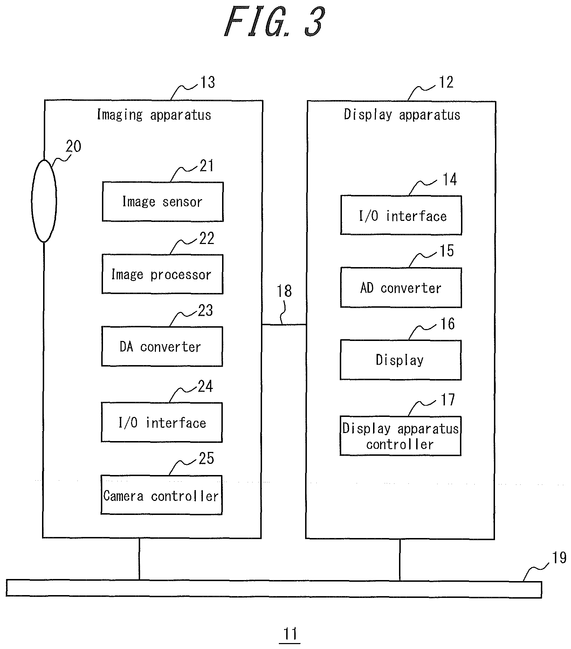

Next, the components of the camera system 11 are described in detail with reference to FIG. 3. To simplify the explanation, only one imaging apparatus 13 is illustrated in FIG. 3.

The display apparatus 12 includes an input/output (I/O) interface 14, an AD converter 15, a display 16, and a display apparatus controller 17.

The I/O interface 14 is an interface for input and output of information over a dedicated line 18, such as an analog video signal line, and a network 19, such as a controller area network (CAN).

The AD converter 15 is, for example, an analog-to-digital (ADC) converter that generates a digital image signal (second digital image signal) by A/D conversion of an analog image signal input from the imaging apparatus 13 over the dedicated line 18 and the I/O interface 14.

The display 16 includes, for example, a liquid crystal display (LCD) and can display video in real time. The display 16 may, for example, be configured as a touch panel and function as an interface that receives user operations.

The display apparatus controller 17 is, for example, a dedicated microprocessor or a general-purpose central processing unit (CPU) that executes specific processing by reading a specific program. The display apparatus controller 17 controls overall operations of the display apparatus 12.

For example, in accordance with generation of a second digital image signal by the AD converter 15, the display apparatus controller 17 outputs information (reference information) indicating an image quality characteristic value of the second digital image signal to the imaging apparatus 13 over the I/O interface 14 and the network 19. The image quality characteristic value is a parameter of the control target during any image processing to adjust an image quality characteristic of the image signal (image quality adjustment processing) and is set freely in accordance with the image quality adjustment processing. In this embodiment, the adjustment of an image quality characteristic is, for example, described as exposure adjustment or white balance adjustment but may include any image quality adjustment processing, such as color correction. The image quality characteristic value for example includes, but is not limited to, the average gain of the color signal component, the average gain of the luminance signal component, the color temperature, or the like in all or a portion of an image based on a digital image signal.

Upon receiving the below-described adjustment completion notification from the imaging apparatus 13, the display apparatus controller 17 subjects the second digital image signal to predetermined image adjustment such as gamma correction, distortion correction, extraction processing, and viewpoint conversion. The display apparatus controller 17 then causes the display 16 to display an image based on the second digital image signal subjected to image adjustment.

The imaging apparatus 13 includes an optical system 20, an image sensor 21, an image processor 22, a DA converter 23, an I/O interface 24, and a camera controller 25.

The optical system 20 is configured to include an aperture and a plurality of lenses and forms an image of a subject. In this embodiment, the optical system 20 has a wide field of view and can image a subject in the surrounding area of the vehicle 10.

The image sensor 21 is, for example, a complementary metal oxide semiconductor (CMOS) image sensor, captures an image of a subject formed by the optical system 20, and generates an analog image signal.

The image processor 22 includes, for example, an analog front end (AFE) and a dedicated processor for image processing, such as a digital signal processor (DSP). The image processor 22 subjects the analog image signal generated by the image sensor 21 to pre-image processing, such as correlated double sampling (CDS), auto gain control (AGC), and A/D conversion, and generates a digital image signal (first digital image signal). The image processor 22 also subjects the first digital image signal to predetermined post-image processing, such as exposure adjustment, white balance adjustment, color interpolation, color correction, and gamma correction.

In accordance with a reference signal received from the display apparatus 12 over the network 19 and the I/O interface 24, the image processor 22 further adjusts an image quality characteristic of the first digital image signal, which was subjected to post-image processing, by performing exposure adjustment, white balance adjustment, or the like. Details on adjustment of the image quality characteristic of the first digital image signal are provided below.

The image processor 22 may, for example, set a digital image signal having a predetermined image quality characteristic value, such as a test pattern image, to be the first digital image.

The DA converter 23 is, for example, a digital-to-analog converter (DAC) and converts the first digital image signal to an analog image signal for output. The image processor 22 outputs the analog image signal to the display apparatus 12 over the I/O interface 24 and the dedicated line 18.

The I/O interface 24 is an interface for input and output of information over the dedicated line 18 and the network 19, such as a CAN.

The camera controller 25 is, for example, a dedicated microprocessor or a general-purpose CPU that executes specific processing by reading a specific program. The camera controller 25 controls overall operations of the imaging apparatus 13.

For example, the camera controller 25 controls operations of the image sensor 21 to generate an analog image signal periodically, for example at 30 fps. The camera controller 25 also controls operations of the image processor 22 to generate the first digital image by performing pre-image processing on the analog signal generated by the image sensor 21. The camera controller 25 also controls operations of the image processor 22 to perform post-image processing on the first digital image.

The camera controller 25 controls operations of the image processor 22 and the DA converter 23 to adjust an image quality characteristic of the first digital image signal, in this embodiment by performing exposure adjustment or white balance adjustment. Details are provided below.

First, the camera controller 25 temporarily holds the image quality characteristic value of the first digital image signal subjected to post-image processing until, for example, generating the analog image signal of the next frame. In this embodiment, the image quality characteristic value that is temporarily held is set as the below-described target value. Subsequently, the camera controller 25 controls operations of the DA converter 23 to output, to the display apparatus 12 over the I/O interface 24 and the dedicated line 18, the analog image signal yielded by D/A conversion of the first digital image signal subjected to post-image processing. Next, in accordance with the output of the analog image signal generated by the DA converter 23, the camera controller 25 receives the reference information from the display apparatus 12 over the network 19 and the I/O interface 24. As described above, the reference information is information indicating the image quality characteristic value of the second digital image signal generated by the display apparatus 12.

Subsequently, the camera controller 25 determines whether the image quality characteristic value of the second digital image signal indicated by the reference information approximately matches the predetermined target value. The image quality characteristic value approximately matching the target value refers, for example, to the image quality characteristic value being within a numerical range considered to substantially match the target value. In this embodiment, the target value is the temporarily held image quality characteristic value of the first digital image signal. Here, the image quality characteristic value of the first digital image signal may be an image quality characteristic value in the entire image based on the first digital image signal or in a partial area thereof corresponding to the reference information.

When the image quality characteristic value does not approximately match the target value, the camera controller 25 further performs exposure adjustment or white balance adjustment on the first digital image signal so that the image quality characteristic value of the second digital image signal becomes closer to the target value. Subsequently, the camera controller 25 controls operations of the DA converter 23 to output, to the display apparatus 12 over the I/O interface 24 and the dedicated line 18, the analog image signal yielded by D/A conversion of the first digital image signal on which exposure adjustment or white balance adjustment was performed. The camera controller 25 receives the reference information from the display apparatus 12 in accordance with output of the analog image signal and performs feedback control by repeatedly performing adjustment of the image quality characteristic of the first digital image signal.

On the other hand, when the image quality characteristic value of the second digital image signal approximately matches the target value, the camera controller 25 ends the adjustment of the image quality characteristic of the first digital image signal and outputs an adjustment completion notification to the display apparatus 12.

By thus adjusting the image quality characteristic of the first digital image signal, the image quality characteristic value of the second digital image signal indicated by the reference information is subjected to feedback control so as to approximately match the temporarily held target value, i.e. the image quality characteristic value of the first digital image signal subjected to post-image processing. The feedback control may be performed repeatedly until the image quality characteristic value of the second digital image signal approximately matches the target value, as described above, or an upper limit (such as one time) may be placed on the number of times the feedback is repeated.

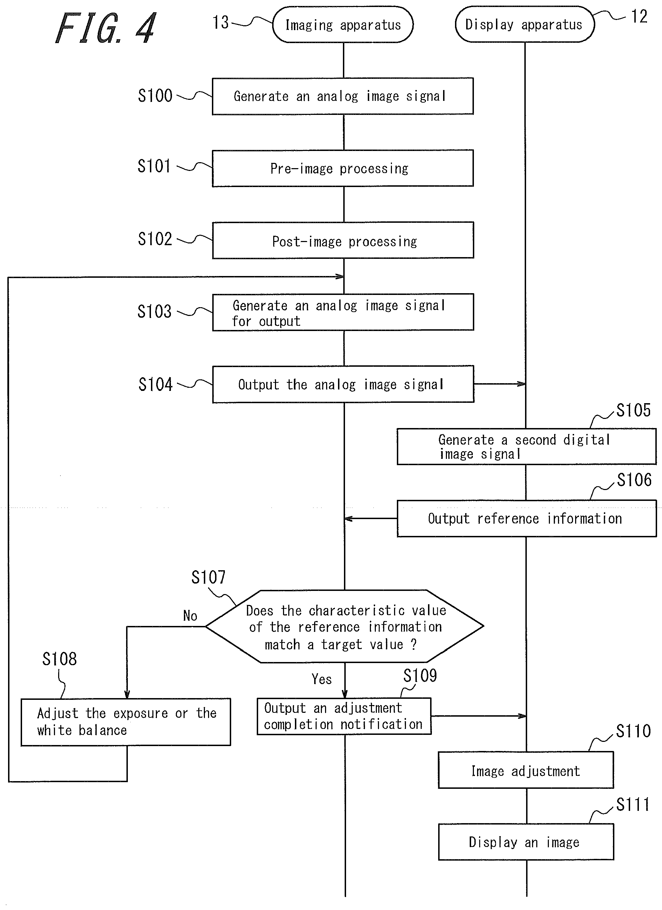

Next, with reference to the flowchart in FIG. 4, an example of the operations of the camera system 11 according to this embodiment is described. For example, the imaging apparatus 13 performs these operations on each frame constituting the analog image signal.

Step S100: The imaging apparatus 13 images a subject and generates an analog image signal.

Step S101: The imaging apparatus 13 applies pre-image processing to the analog image signal to generate a first digital image signal.

Step S102: The imaging apparatus 13 applies post-image processing to the first digital image signal. Here, the imaging apparatus 13 temporarily holds the image quality characteristic value of the first digital image signal subjected to post-image processing.

Step S103: The imaging apparatus 13 converts the first digital image signal into an analog image signal for output.

Step S104: The imaging apparatus 13 outputs the analog image signal of step S103 to the display apparatus 12 over the dedicated line 18.

Step S105: The display apparatus 12 subjects the analog image signal of step S104 to A/D conversion to generate a second digital image signal.

Step S106: The display apparatus 12 outputs reference information indicating an image quality characteristic value of the second digital image signal to the imaging apparatus 13 over the network 19.

Step S107: The imaging apparatus 13 determines whether the image quality characteristic value of the second digital image signal indicated by the received reference information approximately matches a predetermined target value. Here, the target value is the image quality characteristic value temporarily held in step S102. When the image quality characteristic value does not approximately match the target value (step S107: No), the processing proceeds to step S108. Conversely, when the image quality characteristic value approximately matches the target value (step S107: Yes), the processing proceeds to step S109.

Step S108: When the image quality characteristic value does not approximately match the target value in step S107 (step S107: No), the imaging apparatus 13 performs adjustment of the image quality characteristic of the first digital image signal, in this embodiment by performing exposure adjustment or white balance adjustment, so that the image quality characteristic value of the second digital image signal indicated by the reference information becomes closer to the target value. The imaging apparatus 13 then returns to step S103 and repeats the adjustment of the image quality characteristic of the first digital image signal.

Step S109: When the image quality characteristic value approximately matches the target value in step S107 (step S107: Yes), the imaging apparatus 13 outputs an adjustment completion notification to the display apparatus 12.

Step S110: Upon receiving the adjustment completion notification, the display apparatus 12 subjects the second digital image signal generated in step S105 to image adjustment such as gamma correction.

Step S111: The display apparatus 12 displays an image based on the second digital image signal subjected to image adjustment in step S110.

In a typical imaging system using an on-vehicle camera, the digital image signal generated by the on-vehicle camera is, for example, converted to an analog image signal such as a video signal and is then output to the output destination, such as a display apparatus. Therefore, the digital image signal generated by the on-vehicle camera may, for example, be affected by D/A conversion error of the on-vehicle camera, by disturbance during transmission of the analog image signal, or the like. In this way, the digital image signal before D/A conversion in the on-vehicle camera and the digital image signal after A/D conversion at the output destination do not necessarily match. Hence, an imaging system that converts the digital image signal to an analog image signal and outputs the analog image signal has room for improvement regarding the effect of D/A conversion error, disturbance during transmission, or the like.

The imaging apparatus 13 according to Embodiment 1, on the other hand, receives reference information indicating the image quality characteristic value of the second digital image signal that is affected by D/A conversion by the imaging apparatus 13 and is affected during transmission of the analog image signal. By using the reference information, the imaging apparatus 13 can therefore control the image quality characteristic value of the second digital image signal to become closer to the target value, the second digital image signal being generated outside of the imaging apparatus 13, for example by the display apparatus 12. The imaging apparatus 13 can thereby reduce the effect of D/A conversion by the imaging apparatus 13 and the effect during transmission of the analog image signal.

The image quality characteristic value of the first digital image signal, which is not affected by D/A conversion by the imaging apparatus 13 nor affected during transmission of the analog image signal, is temporarily held. By this temporarily held image quality characteristic value being set as the target value, the effect of D/A conversion by the imaging apparatus 13 and the effect during transmission of the analog image signal are further reduced.

### (Embodiment 2)

In broad terms, an imaging apparatus according to Embodiment 2 differs from Embodiment 1 by adjusting an image quality characteristic of the first digital image signal, which is generated by the imaging apparatus, using another imaging apparatus in the vehicle as a standard. Details are provided below.

A camera system 11 according to Embodiment 2 includes a display apparatus and a plurality of imaging apparatuses 13. The camera system 11 in this embodiment includes four imaging apparatuses 13. The four imaging apparatuses 13 are distinguished by being referred to as a front camera 13a, a rear camera 13b, a left-side camera 13c, and a right-side camera 13d.

The display apparatus 12 includes an input/output (I/O) interface 14, an AD converter 15, a display 16, and a display apparatus controller 17. The I/O interface 14, AD converter 15, and display 16 are the same as in Embodiment 1.

The display apparatus controller 17 is, for example, a dedicated microprocessor or a general-purpose CPU that executes specific processing by reading a specific program. The display apparatus controller 17 controls overall operations of the display apparatus 12.

For example, in accordance with generation of a second digital image signal by the AD converter 15, the display apparatus controller 17 outputs reference information indicating an image quality characteristic value of the second digital image signal to the imaging apparatus 13 over the I/O interface 14 and the network 19. The image quality characteristic value of the second digital image signal indicated by the reference information may, for example, include an image quality characteristic value in all or a portion of an image based on the second digital image signal. The reference information may indicate an image quality characteristic value of the image based on the second digital image signal in a surrounding area, of the vehicle 10, that can be imaged in overlap by a plurality of imaging apparatuses 13. Here, the surrounding areas are, for example, the front left area FLA, front right area FRA, rear left area ReLA, and rear right area ReRA illustrated in FIG. 2.

Upon receiving the below-described adjustment completion notification from any of the imaging apparatuses 13, the display apparatus controller 17 outputs the reference information of that imaging apparatus 13 to another imaging apparatus 13 indicated in the adjustment completion notification. Details on the processing to output the reference information of the imaging apparatus 13 to another imaging apparatus 13 are provided below.

Upon receiving the below-described adjustment completion notification from all of the imaging apparatuses 13, the display apparatus controller 17 subjects the second digital image signal of each imaging apparatus 13 to predetermined image adjustment such as gamma correction, distortion correction, extraction processing, and viewpoint conversion. The display apparatus controller 17 then generates a combined image by combining images that are based on a plurality of second digital image signals converted to overhead images by image adjustment. The combined image is, for example, an overhead image of the entire surroundings of the vehicle 10. In the overhead image of the entire surroundings, for example the image of the front camera 13a is used in the front area FA, the front left area FLA, and the front right area FRA, the image of the rear camera 13b is used in the rear area ReA, the rear left area ReLA, and the rear right area ReRA, the image of the left-side camera 13c is used in the left area LA, and the image of the right-side camera 13d is used in the right area RA. The display apparatus controller 17 then displays the combined image on the display 16.

The imaging apparatus 13 includes an optical system 20, an image sensor 21, an image processor 22, a DA converter 23, an I/O interface 24, and a camera controller 25. The optical system 20, the image sensor 21, the image processor 22, the DA converter 23, and the I/O interface 24 are the same as in Embodiment 1.

The camera controller 25 is, for example, a dedicated microprocessor or a general-purpose CPU that executes specific processing by reading a specific program. The camera controller 25 controls overall operations of the imaging apparatus 13.

For example, the camera controller 25 controls operations of the image sensor 21 to generate an analog image signal periodically, for example at 30 fps. The camera controller 25 also controls operations of the image processor 22 to generate the first digital image by performing pre-image processing on the analog image signal generated by the image sensor 21. The camera controller 25 also controls operations of the image processor 22 to perform post-image processing on the first digital image. The camera controller 25 also temporarily holds the image quality characteristic value of the first digital image signal subjected to post-image processing until, for example, generating the analog image signal of the next frame.

The camera controller 25 acquires control information of the vehicle 10 for the time at which the analog image signal is generated by the image sensor 21. The control information includes time information and a variety of information related to the status of the vehicle 10. The variety of information related to the status of the vehicle 10 includes, for example, information indicating the direction of travel (forward or backward) of the vehicle 10, information indicating the steering angle, information indicating the status of the turn signals, information indicating the status of lighting (for example, headlights, tail lights, and brake lights), and information indicating the speed of the vehicle 10. The camera controller 25 can acquire the control information with any method. For example, the camera controller 25 may acquire the control information from the vehicle 10 over the network 19 and the I/O interface 24. Alternatively, over a wired or wireless connection, the camera controller 25 may acquire control information output by other components, such as various sensors provided in the vehicle 10.

In accordance with the control information of the vehicle 10, the camera controller 25 determines the superior/subordinate relationships of the imaging apparatuses 13. The superior/subordinate relationships establish a superior imaging apparatus 13 and a subordinate imaging apparatus 13 with respect to the superior imaging apparatus 13 for when each imaging apparatus 13 adjusts an image quality characteristic of the first digital image signal, as described below. A detailed example of the superior/subordinate relationships is described below. In the superior/subordinate relationships, each imaging apparatus 13 is, for example, set to be one of a primary apparatus, a secondary apparatus, and a tertiary apparatus, in order from the highest level. The superior/subordinate relationships are determined freely in accordance with the control information of the vehicle 10. The camera controller 25 in this embodiment sets one imaging apparatus 13, corresponding to an area of the combined image that the driver is highly likely to focus on in accordance with conditions of the vehicle 10, to be the primary apparatus. The camera controller 25 sets another imaging apparatus 13 that can capture an area overlapping the imaging area of the primary apparatus to be a secondary apparatus. The camera controller 25 sets another imaging apparatus 13 that can capture an area overlapping the imaging area of the secondary apparatus to be a tertiary apparatus. For example, the display apparatus controller 17 can determine that the vehicle 10 is about to turn left when the control information includes information indicating that the direction of travel of the vehicle 10 is forward, the left turn signal is on, and the speed is zero (the vehicle is stopped). At this time, it is thought that the driver of the vehicle 10 will focus on the front left area FLA of the vehicle 10 in the combined image. The camera controller 25 therefore sets the front camera 13a corresponding to the front left area FLA in the combined image to be the primary apparatus. The camera controller 25 sets the left-side camera 13c and the right-side camera 13d, which can capture areas overlapping the imaging area of the front camera 13a, to be secondary apparatuses. The camera controller 25 sets the rear camera 13b, which can capture an area overlapping the imaging area of the left-side camera 13c or an area overlapping the imaging area of the right-side camera 13d, to be a tertiary apparatus. One of the imaging apparatuses 13 among the plurality of imaging apparatuses 13 may determine the superior/subordinate relationships and may notify the other imaging apparatuses 13 of the determined superior/subordinate relationships, for example over the I/O interface 24 and the network 19.

The camera controller 25 controls operations of the image processor 22 and the DA converter 23 to adjust the image quality characteristic of the first digital image signal, in this embodiment by performing exposure adjustment or white balance adjustment. The target value of the image quality characteristic value during the exposure adjustment or white balance adjustment differs for each imaging apparatus 13 in accordance with the superior/subordinate relationships. For example, the front camera 13a is described below as being the primary apparatus, the left-side camera 13c and the right-side camera 13d as being secondary apparatuses, and the rear camera 13b as being a tertiary apparatus.

As in Embodiment 1, the camera controller 25 of the primary apparatus (front camera 13a) sets the image quality characteristic value of the first digital image signal subjected to post-image processing as a target value and temporarily holds the target value. Subsequently, on the basis of the reference information of the imaging apparatus in which the camera controller 25 is included, the camera controller 25 performs exposure adjustment or white balance adjustment on the first digital image signal so that the image quality characteristic value of the second digital image signal becomes closer to the target value.

When adjustment of the first digital image signal is complete, the camera controller 25 outputs an adjustment completion notification to the display apparatus 12. Here, the adjustment completion notification includes information indicating the secondary apparatuses (left-side camera 13c and right-side camera 13d) that are subordinate to the primary apparatus. The display apparatus 12 that has received the adjustment completion notification then transmits, over the I/O interface 14 and the network 19, a reference signal of the primary apparatus to the secondary apparatuses subordinate to the primary apparatus. This reference signal includes information indicating the image quality characteristic value of the second digital image signal generated in accordance with the first digital image signal of the primary apparatus that completed adjustment of the image quality characteristic.

The camera controller 25 of the secondary apparatus (for example, the left-side camera 13c) waits for the reference information of the superior primary apparatus (front camera 13a). Subsequently, upon receiving the reference information of the primary apparatus, the camera controller 25 sets the image quality characteristic value of the second digital image signal of the primary apparatus, as indicated by the reference information, as a target value and temporarily holds the target value. The camera controller 25 then controls operations of the DA converter 23 to output, to the display apparatus 12, the analog image signal yielded by D/A conversion of the first digital image signal subjected to post-image processing. Subsequently, the camera controller 25 receives the reference information of the imaging apparatus 13 in which the camera controller 25 is included from the display apparatus 12. The camera controller 25 then determines whether the image quality characteristic value of the second digital image signal indicated by the reference information of the imaging apparatus 13 in which the camera controller 25 is included approximately matches the target value.

When the image quality characteristic value does not approximately match the target value, the camera controller 25 adjusts the image quality characteristic of the first digital image signal subjected to post-image processing so that the image quality characteristic value of the second digital image signal indicated by the reference information of the imaging apparatus 13 in which the camera controller 25 is included becomes closer to the target value. In greater detail, the camera controller 25 performs exposure adjustment or white balance adjustment. The camera controller 25 then controls operations of the DA converter 23 to output, to the display apparatus 12, the analog image signal yielded by D/A conversion of the adjusted first digital image signal and repeats adjustment of the image quality characteristic of the first digital image signal.

On the other hand, when the image quality characteristic value approximately matches the target value, the camera controller 25 ends the adjustment of the image quality characteristic of the first digital image signal and outputs an adjustment completion notification to the display apparatus 12. The adjustment completion notification includes information indicating the tertiary apparatus (rear camera 13b) that is subordinate to the secondary apparatus.

In this way, the secondary apparatus adjusts the image quality characteristic of the first digital image signal of the secondary apparatus so that the image quality characteristic value of the second digital image signal indicated by the reference information of the secondary apparatus becomes closer to the image quality characteristic value of another second digital image signal indicated by the reference information of the primary apparatus.

The operations of the right-side camera 13d, which is also a secondary apparatus, are similar to those of the left-side camera 13c.

The display apparatus 12 that has received the adjustment completion notification then transmits, over the I/O interface 14 and the network 19, a reference signal of the secondary apparatus to the tertiary apparatus subordinate to the secondary apparatus. This reference signal includes information indicating the image quality characteristic value of the second digital image signal generated in accordance with the first digital image signal of the secondary apparatus that completed adjustment of the image quality characteristic.

The camera controller 25 that is the tertiary apparatus (rear camera 13b) waits for the reference information of the superior secondary apparatus (at least one of the left-side camera 13c and right-side camera 13d). Subsequently, upon receiving the reference information of the secondary apparatus, the camera controller 25 sets the image quality characteristic value of the second digital image signal of the secondary apparatus, as indicated by the reference information, as a target value and temporarily holds the target value. The camera controller 25 then controls operations of the DA converter 23 to output, to the display apparatus 12, the analog image signal yielded by D/A conversion of the first digital image signal subjected to post-image processing. Subsequently, the camera controller 25 receives the reference information of the imaging apparatus 13 in which the camera controller 25 is included from the display apparatus 12. The camera controller 25 then determines whether the image quality characteristic value of the second digital image signal indicated by the reference information of the imaging apparatus 13 in which the camera controller 25 is included approximately matches the target value.

When the image quality characteristic value does not approximately match the target value, the camera controller 25 adjusts the image quality characteristic of the first digital image signal subjected to post-image processing so that the image quality characteristic value of the second digital image signal indicated by the reference information of the imaging apparatus 13 in which the camera controller 25 is included becomes closer to the target value. In greater detail, the camera controller 25 performs exposure adjustment or white balance adjustment. The camera controller 25 then controls operations of the DA converter 23 to output, to the display apparatus 12, the analog image signal yielded by D/A conversion of the adjusted first digital image signal and repeats adjustment of the image quality characteristic of the first digital image signal.

On the other hand, when the image quality characteristic value approximately matches the target value, the camera controller 25 ends the adjustment of the image quality characteristic of the first digital image signal and outputs an adjustment completion notification to the display apparatus 12.

In this way, the tertiary apparatus adjusts the image quality characteristic of the first digital image signal of the tertiary apparatus so that the image quality characteristic value of the second digital image signal indicated by the reference information of the tertiary apparatus becomes closer to the image quality characteristic value of another second digital image signal indicated by the reference information of the secondary apparatus.

The display apparatus 12 that has received the adjustment completion notification from all of the imaging apparatuses 13 causes the display 16 to display a combined image yielded by combining images that are based on a plurality of second digital image signals converted to overhead images, as described above.

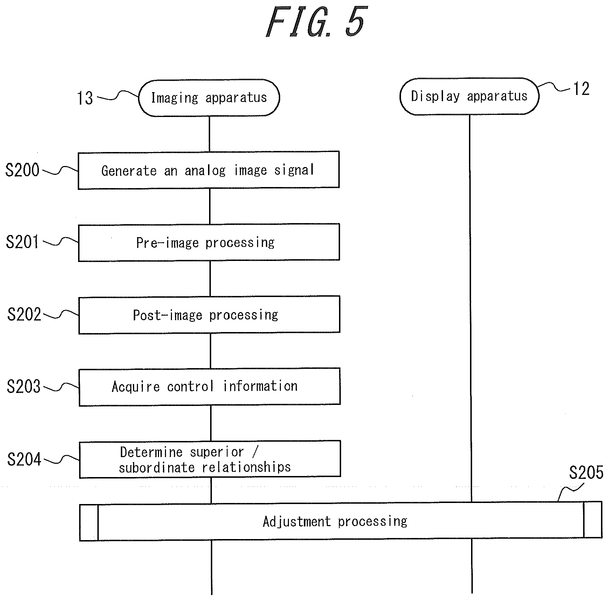

Next, with reference to the flowchart in FIG. 5, an example of the operations of the imaging apparatuses 13 according to this embodiment is described. For example, the imaging apparatus 13 performs these operations on each frame constituting the analog image signal.

Step S200: The imaging apparatus 13 images a subject and generates an analog image signal.

Step S201: The imaging apparatus 13 applies pre-image processing to the analog image signal to generate a first digital image signal.

Step S202: The imaging apparatus 13 applies post-image processing to the first digital image signal.

Step S203: The imaging apparatus 13 acquires control information of the vehicle 10 for the time at which the analog image signal is generated in step S200.

Step S204: In accordance with the control information of the vehicle 10, the imaging apparatus 13 determines the superior/subordinate relationships of the imaging apparatuses 13. Here, the front camera 13a is assumed to be the primary apparatus, the left-side camera 13c and the right-side camera 13d to be secondary apparatuses, and the rear camera 13b to be a tertiary apparatus. One of the plurality of imaging apparatuses 13 may execute the processing in step S204 and notify the other imaging apparatuses 13 of the determined superior/subordinate relationships. The front camera 13a determined to be the primary apparatus sets the image quality characteristic value of the first digital image signal subjected to post-image processing as a target value and temporarily holds the target value.

Step S205: Along with the display apparatus 12, the imaging apparatus 13 performs processing to adjust an image quality characteristic of the first digital image signal. The content of the processing to adjust the image quality characteristic differs for each imaging apparatus 13 in accordance with the superior/subordinate relationships, as described above.

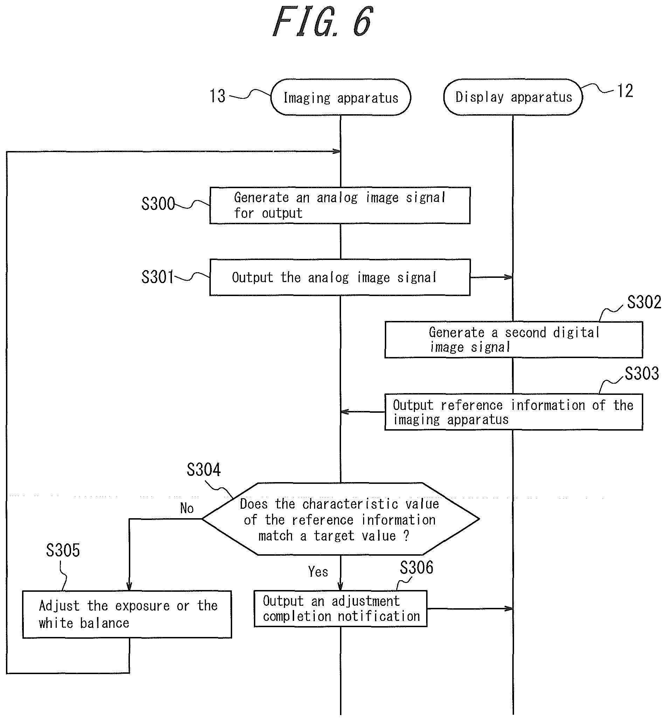

Next, with reference to the flowchart in FIG. 6, an example of the operations of the display apparatus 12 and the imaging apparatus 13 determined to be the primary apparatus (for example, the front camera 13a) is described. These operations correspond to the processing to adjust the image quality characteristic of the first digital image signal in step S205 of FIG. 5.

Step S300: The front camera 13a converts the first digital image signal into an analog image signal for output.

Step S301: The front camera 13a outputs the analog image signal of step S300 to the display apparatus 12 over the dedicated line 18.

Step S302: The display apparatus 12 subjects the analog image signal of step S301 to A/D conversion to generate a second digital image signal.

Step S303: The display apparatus 12 outputs reference information indicating an image quality characteristic value of the second digital image signal of the front camera 13a to the front camera 13a over the network 19.

Step S304: The front camera 13a determines whether the image quality characteristic value of the second digital image signal indicated by the received reference information approximately matches a predetermined target value. Here, the target value is the image quality characteristic value, temporarily held in step S204 of FIG. 5, of the first digital image signal subjected to post-image processing. When the image quality characteristic value does not approximately match the target value (step S304: No), the processing proceeds to step S305. Conversely, when the image quality characteristic value approximately matches the target value (step S304: Yes), the processing proceeds to step S306.

Step S305: When the image quality characteristic value does not approximately match the target value in step S304 (step S304: No), the front camera 13a performs adjustment of the image quality characteristic of the first digital image signal, by performing exposure adjustment or white balance adjustment in this case, so that the image quality characteristic value of the second digital image signal indicated by the reference information becomes closer to the target value. The front camera 13a then returns to step S300 and repeats the adjustment of the image quality characteristic of the first digital image signal.

Step S306: When the image quality characteristic value approximately matches the target value in step S304 (step S304: Yes), the front camera 13a outputs an adjustment completion notification to the display apparatus 12. The adjustment completion notification includes information indicating the secondary apparatuses (left-side camera 13c and right-side camera 13d) that are subordinate to the primary apparatus.

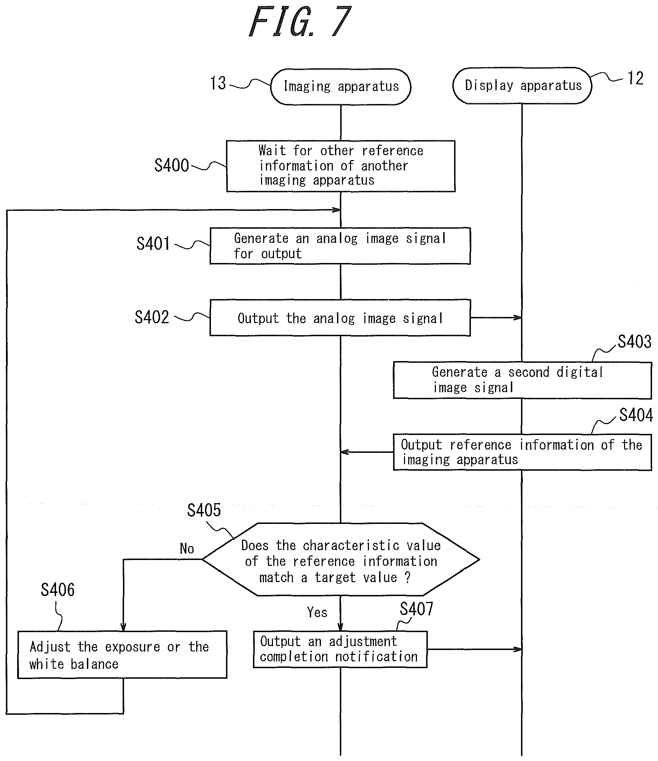

Next, with reference to the flowchart in FIG. 7, an example of the operations of the display apparatus 12 and an imaging apparatus 13 determined to be the secondary apparatus or tertiary apparatus (for example, the left-side camera 13c) is described. These operations correspond to the processing to adjust the image quality characteristic of the first digital image signal in step S205 of FIG. 5.

Step S400: The left-side camera 13c that is a secondary apparatus waits for other reference information of another imaging apparatus 13 that is the superior primary apparatus, in this case the reference information of the front camera 13a. Upon receiving the reference information of the front camera 13a from the display apparatus 12, the left-side camera 13c sets the image quality characteristic value of the second digital image signal of the front camera 13a, as indicated by the reference information, as a target value and temporarily holds the target value. Processing then proceeds to step S401.

Step S401: The left-side camera 13c converts the first digital image signal into an analog image signal for output.

Step S402: The left-side camera 13c outputs the analog image signal of step S401 to the display apparatus 12 over the dedicated line 18.

Step S403: The display apparatus 12 subjects the analog image signal of step S402 to A/D conversion to generate a second digital image signal.

Step S404: The display apparatus 12 outputs reference information indicating an image quality characteristic value of the second digital image signal of the left-side camera 13c to the left-side camera 13c over the network 19.

Step S405: The left-side camera 13c determines whether the image quality characteristic value of the second digital image signal indicated by the reference information received in step S404 approximately matches a predetermined target value. Here, the target value is the image quality characteristic value, temporarily held in step S400, of the second digital image signal of the primary apparatus (the front camera 13a). When the image quality characteristic value does not approximately match the target value (step S405: No), the processing proceeds to step S406. Conversely, when the image quality characteristic value approximately matches the target value (step S405: Yes), the processing proceeds to step S407.

Step S406: When the image quality characteristic value does not approximately match the target value in step S405 (step S405: No), the left-side camera 13c performs adjustment of the image quality characteristic of the first digital image signal, by performing exposure adjustment or white balance adjustment in this case, so that the image quality characteristic value of the second digital image signal indicated by the reference information of the left-side camera 13c becomes closer to the target value. The left-side camera 13c then returns to step S401 and repeats the adjustment of the image quality characteristic of the first digital image signal.

Step S407: When the image quality characteristic value approximately matches the target value in step S405 (step S405: Yes), the imaging apparatus 13 outputs an adjustment completion notification to the display apparatus 12. The adjustment completion notification includes information indicating the tertiary apparatus (rear camera 13b) that is subordinate to the secondary apparatus.

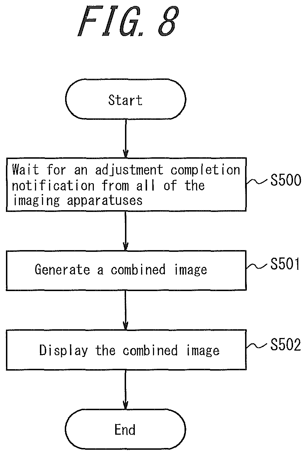

Next, with reference to the flowchart in FIG. 8, an example of the operations for the display apparatus 12 to display a combined image is described.

Step S500: The display apparatus 12 waits for an adjustment completion notification from all of the imaging apparatuses 13. Upon the display apparatus 12 acquiring an adjustment completion notification from all of the imaging apparatuses 13, the processing proceeds to step S501.

Step S501: The display apparatus 12 generates a combined image by combining images yielded by subjecting the second digital image signal of each imaging apparatus 13 to predetermined image adjustment.

Step S502: The display apparatus 12 displays the combined image.

In this way, the imaging apparatus 13 according to Embodiment 2 receives other reference information of another imaging apparatus 13 and sets the image quality characteristic value of the other second digital image signal indicated by the other reference information as the target value. The second digital image signal of the imaging apparatus 13 is generated outside of the imaging apparatus 13, for example by the display apparatus 12, and by using other reference information, the imaging apparatus 13 can control the image quality characteristic value of its second digital image signal to become closer to the image quality characteristic value of the second digital image signal of another imaging apparatus 13. Therefore, the effect of D/A conversion by the imaging apparatus 13 and the effect during transmission of the analog image signal are reduced, and an image quality characteristic such as color or brightness of the second digital image signal approximately match between the imaging apparatus 13 and another imaging apparatus 13. A plurality of images with approximately matching color or brightness are, for example, suitable for improving visibility of a combined image generated by combining the plurality of images.

### (Embodiment 3)

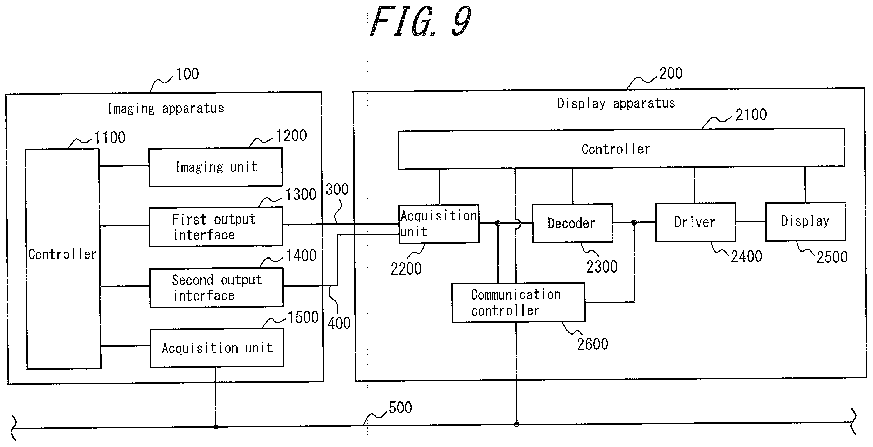

FIG. 9 illustrates an example of a functional block diagram of an anomaly determination system (imaging system) that includes an imaging apparatus according to Embodiment 3. The anomaly determination system is configured to include an imaging apparatus 100, a display apparatus 200, a first transmission path 300, a second transmission path 400, and a third transmission path 500. The display apparatus 200 displays the image captured by the imaging apparatus 100. The imaging apparatus 100 determines whether an anomaly has occurred along the output path of the captured image.

Next, the functions of the imaging apparatus 100 and display apparatus 200 are described, but it should be noted that other functions provided in the imaging apparatus 100 and display apparatus 200 are in no way excluded. The imaging apparatus 100 and display apparatus 200 according to this embodiment are, for example, installed in a vehicle. The imaging apparatus 100 may be installed in any mode of transport other than a vehicle. The imaging apparatus 100 communicates with electronic device-related components, but in the following explanation, the components constituting other functional units are omitted from the drawings and are not described.

The imaging apparatus 100 includes a controller 1100, an imaging unit 1200, a first output interface 1300, a second output interface 1400, and an acquisition unit 1500.

The controller 1100 is a computer that controls various operations of the imaging apparatus 100. For example, the controller 1100 performs any type of image processing (A/D conversion, D/A conversion, and the like) on the images acquired from the imaging unit 1200. The controller 1100 also encodes images. Furthermore, the controller 1100 compares the image acquired by the below-described acquisition unit 1500 with the corresponding area of the below-described test pattern image output by the first output interface 1300. A non-limiting example of the test pattern image is a predetermined color bar signal. The test pattern image may be a color image or a monochrome image.

The imaging unit 1200 includes an optical system and an image sensor. The optical system is configured by an optical element such as a lens and forms an image of the surroundings of the vehicle in which the imaging apparatus 1 is installed. The image sensor may, for example, be a CMOS or a CCD image sensor and captures the image formed by the optical system as a color image or a monochrome image.

The first output interface 1300 is, for example, a connector. The first output interface 1300 can switch between outputting the image captured by the imaging unit 1200 and a predetermined test pattern image to the display apparatus 200 over the first transmission path 300.

The second output interface 1400 is, for example, a connector. The second output interface 1400 outputs information designating at least a partial area of the test pattern image to the display apparatus 200 over the second transmission path 400.

The acquisition unit 1500 is, for example, a connector. The acquisition unit 1500 acquires at least a partial area of the test pattern image from the display apparatus 200. The acquisition unit 1500 outputs the acquired image to the controller 1100.

The display apparatus 200 includes a controller 2100, an acquisition unit 2200, a decoder 2300, a driver 2400, a display 2500, and a communication controller 2600.

The controller 2100 is a computer that controls various operations of the display apparatus 200. For example, the controller 2100 causes the below-described communication controller 2600 to extract an image of at least a partial area from the test pattern image acquired by the below-described acquisition unit 2200.

The acquisition unit 2200 is, for example, a connector. The acquisition unit 2200 acquires at least one of the captured image and the test pattern image from the first output interface 1300. The acquisition unit 2200 also acquires information designating at least a partial area of the test pattern image from the second output interface 1400. The acquisition unit 2200 outputs the acquired information to the decoder 2300. In Embodiment 4 described below, the acquisition unit 2200 outputs the acquired image to the communication controller 2600.

The decoder 2300 decodes an image signal of at least one of the captured image and the test pattern image acquired by the acquisition unit 2200. The decoder 2300 is, for example, a DSP that performs image processing. The decoder 2300 outputs the decoded image to the driver 2400.

The driver 2400 is, for example, an LCD driver. The driver 2400 drives the display 2500 in accordance with the image acquired from the decoder 2300.

The display 2500 is, for example, a liquid crystal display and displays the captured image by being driven by the driver 2400. The display 2500 may display the test pattern image. The display 2500 may, for example, be configured as a touch panel and function as an interface that receives input from a user.

The communication controller 2600 is, for example, a gate array CAN controller. The communication controller 2600 acquires the test pattern image after decoding by the decoder 2300. The communication controller 2600 extracts, from the acquired test pattern image, an image of an area corresponding to the information, acquired by the acquisition unit 2200, designating at least a partial area of the test pattern image. The communication controller 2600 outputs the extracted image to the imaging apparatus 100 over the third transmission path 500.

The first transmission path 300 is, for example, a dedicated line. The first transmission path 300 transmits the image output by the first output interface 1300 to the display apparatus 200. The second transmission path 400 is, for example, a dedicated line but may instead be a bus. The second transmission path 400 transmits the information output by the second output interface 1400 to the display apparatus 200. Instead of the second transmission path 400, the below-described third transmission path 500 may transmit the information output by the second output interface 1400 to the display apparatus 200.

The third transmission path 500 is, for example, a bus. The third transmission path 500 transmits the image output by the communication controller 2600 to the imaging apparatus 100 by CAN communication. The number of third transmission paths 500 may be two or more.

### [Processing executed by the anomaly determination system]

The controller 1100 detects that the engine of the vehicle in which the imaging apparatus 100 is installed has started and that the imaging apparatus 100 has turned on. Upon detecting that the imaging apparatus 100 has turned on, the controller 1100 outputs a predetermined test pattern image to the display apparatus 200. The controller 1100 may output the test pattern image to the display apparatus 200 when any driving operation is performed on the vehicle, rather than upon detecting that the imaging apparatus 100 has turned on. The driving operation may, for example, include an operation whereby the driver of the vehicle shifts into reverse gear. The acquisition unit 2200 acquires the test pattern image on the display apparatus 200 and outputs the test pattern image to the decoder 2300.

The decoder 2300 decodes the test pattern image. Next, the decoder 2300 outputs the decoded test pattern image to the communication controller 2600.

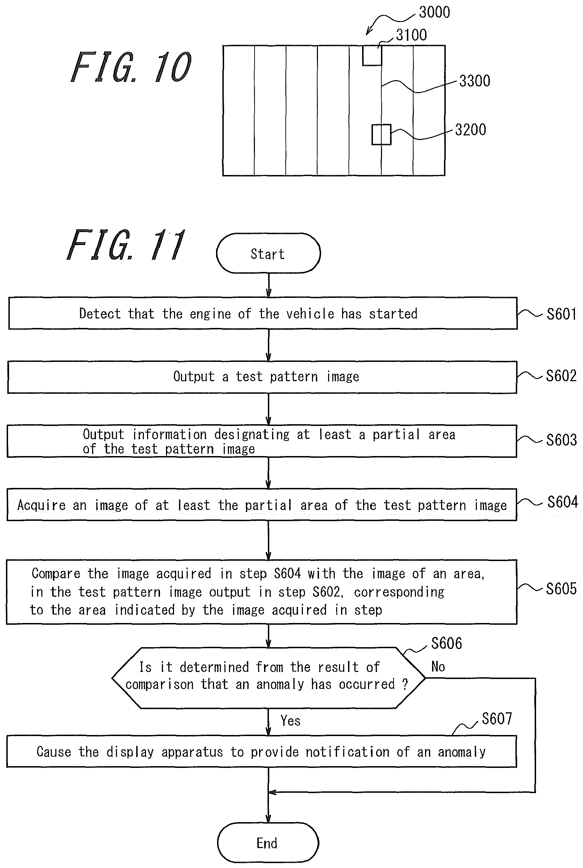

The communication controller 2600 extracts an image of at least a partial area from the acquired test pattern image. For example, from the entire test pattern image 3000 illustrated in FIG. 10, the communication controller 2600 extracts an image 3100, 3200, or the like of at least a partial area. As illustrated in FIG. 10, this at least partial area is an area that, for example, includes a predetermined boundary 3300 in the test pattern image, i.e. a boundary portion where the pixel value changes as a result of displacement.

The communication controller 2600 outputs the extracted image to the imaging apparatus 100 over the third transmission path 500.

The area extracted by the communication controller 2600 from the test pattern image is, for example, designated by the controller 1100 of the imaging apparatus 100. In greater detail, the controller 1100 designates the area to extract by, for example, the coordinates of one or more pixels constituting the image of the area. The controller 1100 outputs information designating at least a partial area of the test pattern image to the display apparatus 200 over the second transmission path 400 at or around the time of outputting the test pattern image to the display apparatus 200.

The acquisition unit 1500 acquires the image of at least a partial area of the test pattern image output from the communication controller 2600 in the display apparatus 2. The controller 1100 of the imaging apparatus 100 compares (verifies) the image acquired by the acquisition unit 1500 with the image of an area, in the test pattern image output by the first output interface 1300, corresponding to the area shown in the acquired image. In other words, the controller 1100 of the imaging apparatus 100 compares the pixel information of the two images. The corresponding area is the area designated by the imaging apparatus 100 in the two images being compared.

When the controller 1100 determines that the pixel information of the two compared images is not identical, it is presumed that an anomaly has occurred between the imaging apparatus 100 and the display apparatus 200 or in the display apparatus 200. In this case, the controller 1100 causes the display apparatus 200 to provide notification of an anomaly, for example over the third transmission path 500. The controller 1100 may, in this case, output information that can stop a particular function of the vehicle to an on-vehicle device that includes the display apparatus 200.

On the other hand, when the controller 1100 determines that the pixel information of the two compared images is identical, it is presumed that no anomaly has occurred between the imaging apparatus 100 and the display apparatus 200 or in the display apparatus 200.

### [Operation flow]

As illustrated in FIG. 11, the imaging apparatus 100 detects that the engine of the vehicle in which the imaging apparatus 100 is installed has started (step S601). The imaging apparatus 100 outputs the test pattern image to the display apparatus 200 (step S602). The imaging apparatus 100 outputs information designating at least a partial area of the test pattern image output in step S602 to the display apparatus 200 (step S603). Step S603 may be performed simultaneously with, before, or after step S602. The imaging apparatus 100 acquires an image of at least the partial area of the test pattern image output from the display apparatus 200 (step S604). The imaging apparatus 100 compares the image acquired in step S604 with the image of an area, in the test pattern image output in step S602, corresponding to the area shown in the image acquired in step S604 (step S605). From the result of the comparison, the imaging apparatus 100 determines whether an anomaly has occurred (step S606). When determining that an anomaly has occurred (step S606: Yes), the imaging apparatus 100 causes the display apparatus 200 to provide notification of an anomaly (step S607). The imaging apparatus 100 may output information that can stop a particular function of the vehicle to an on-vehicle device. When determining that no anomaly has occurred (step S606: No), the imaging apparatus 100 does not perform step S607.

As described above, the controller 1100 of this embodiment compares the image acquired by the acquisition unit 1500 with the image of an area, in the test pattern image output by the first output interface 1300, corresponding to the area shown in the acquired image. As a result, it can be determined whether an anomaly has occurred between the imaging apparatus 100 and the display apparatus 200 or in the display apparatus 200.

The at least partial area is, for example, a boundary portion predetermined as a test pattern image. In the area of the boundary portion, image distortion easily occurs when, for example, phase misalignment of synchronization signals occurs because of the effect of a standing wave, generated by a traveling wave and a reflected wave, or the like. Hence, such a configuration makes it easy to determine whether an anomaly has occurred between the camera and the display apparatus or in the display apparatus.

Furthermore, the test pattern image may be a color image having color information. Depending on the anomaly, color information may be lost first from the image. Accordingly, such a configuration makes it easy to determine whether an anomaly has occurred.

### (Embodiment 4)

In Embodiment 3, the communication controller 2600 acquires the test pattern image after decoding by the decoder 2300. In Embodiment 4, however, the communication controller 2600 acquires the test pattern image before decoding by the decoder 2300. Apart from this point, the processing executed by the anomaly determination system is similar to the processing of the above embodiment.

In the case of this embodiment, the image acquired by the communication controller 2600 and output to the imaging apparatus 100 is an image not decoded by the decoder 2300. Accordingly, when the controller 1100 determines that the two compared images are not identical, it is presumed that an anomaly has occurred between the imaging apparatus 100 and the display apparatus 200.

The configuration of this embodiment allows a determination of whether an anomaly has occurred between the imaging apparatus 100 and the display apparatus 200.

### (Embodiment 5)

Embodiment 5 is a combination of Embodiment 3 and Embodiment 4. In other words, the communication controller 2600 acquires both the test pattern image before decoding by the decoder 2300 and the test pattern image after decoding. Furthermore, the communication controller 2600 outputs both test pattern images to the imaging apparatus 100. The acquisition unit 1500 acquires these test pattern images and outputs them to the controller 1100. The controller 1100 of this embodiment compares the test pattern image before decoding by the decoder 2300 with the image of an area, in the test pattern image output by the first output interface 1300, corresponding to the area shown in the acquired image. Furthermore, the controller 1100 compares the test pattern image after decoding by the decoder 2300 with the image of an area, in the test pattern image output by the first output interface 1300, corresponding to the area shown in the acquired image.

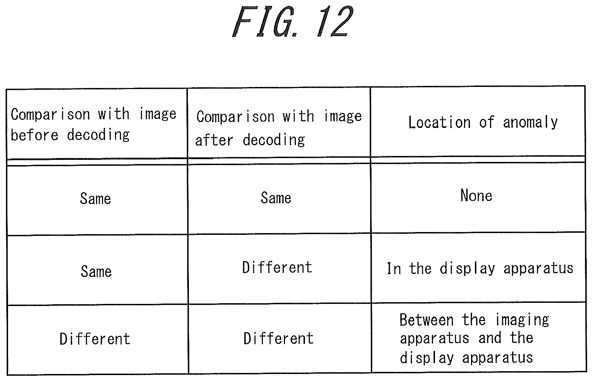

FIG. 12 illustrates the result of determining the location of an anomaly when making two comparisons in this way. "Same" indicates that the compared images are the same, whereas "Different" indicates that the compared images differ.

The configuration of this embodiment allows the controller 1100 to make a detailed determination of the location of an anomaly.

### (Embodiment 6)

In Embodiment 3, the controller 1100 of the imaging apparatus 100 designates the area extracted by the communication controller 2600 from the test pattern image. In Embodiment 6, however, the communication controller 2600 freely determines the area extracted by the communication controller 2600 from the test pattern image. Accordingly, in this embodiment, the anomaly determination system need not include the second output interface 1400.

In this embodiment, the communication controller 2600 indicates the area for which an image was extracted by, for example, the coordinates of one or more pixels constituting the image of the area. The communication controller 2600 outputs the information indicating the area for which an image was extracted to the imaging apparatus 100. The corresponding areas compared by the controller 1100 are areas determined by the communication controller 2600 in the two images being compared.

### (Embodiment 7)

In Embodiment 3, the controller 1100 designates the area extracted by the communication controller 2600 from the test pattern image. In Embodiment 7, however, the area extracted by the communication controller 2600 from the test pattern image is determined in advance. Accordingly, in this embodiment, the anomaly determination system need not include the second output interface 1400.

In this embodiment, the communication controller 2600 extracts a predetermined area and outputs the area to the imaging apparatus 100. The predetermined area may be a partial area or the entire area of the test pattern image.

This disclosure is based on the drawings and on embodiments, but it should be noted that a person of ordinary skill in the art could easily make a variety of modifications and adjustments based on this disclosure. Therefore, such changes and modifications are to be understood as included within the scope of this disclosure. For example, the functions and the like included in the various components and steps may be reordered in any logically consistent way. Furthermore, components or steps may be combined into one or divided.

For example, in Embodiments 1 and 2, the imaging apparatus 13 (the primary apparatus in Embodiment 2) has been described as setting the image quality characteristic value of the first digital image signal of the current frame subjected to post-image processing as the target value, but the embodiments are not limited to this configuration. For example, the image quality characteristic value of the first digital image signal of a past frame subjected to post-image processing may be set as the target value. Similarly, in Embodiment 2, the imaging apparatus 13 determined to be the secondary apparatus, for example, may set the image quality characteristic value of the second digital image signal indicated in the other reference signal of a past frame as the target value.

Embodiment 1 or 2 may be combined with Embodiment 3. For example, the test pattern image according to Embodiment 3 may be adopted as the first digital image signal according to Embodiment 1 or 2. As another example, in Embodiment 1 or 2, it may be determined whether an anomaly has occurred between the imaging apparatus 13 and the display apparatus 12 or in the display apparatus 12 in accordance with a comparison between the image quality characteristic value of at least a partial area of the first digital image signal and the image quality characteristic value of at least a partial area of the second digital image signal.

A portion of the components of the system according to the above-described embodiments may be provided outside of a vehicle. For example, the display apparatus 12, 200, the imaging apparatus 13, 100, and the like may be implemented as a communication device, such as a mobile phone, and may be connected to the other system components by a wired or wireless connection.

When at least one of the imaging apparatus 13, 100 and the display apparatus 12, 200 is configured as a computer, a program containing a description of the processing for achieving the functions is stored within the computer or in an external memory, and the functions are achieved by the central processing unit (CPU) of the computer reading and executing the program. Such a program may, for example, be distributed by the sale, transfer, lending, or the like of a portable recording medium such as a DVD, CD-ROM, or the like. Such a program may also, for example, be distributed by being stored in the memory of a server on a network and then transferred from the server to another computer over the network. For example, the computer that executes such a program can temporarily store, in its own memory, the program recorded on the portable recording medium or transferred from the server. As another embodiment of the program, a computer may read the program directly from the portable recording medium and execute processing in accordance with the program, or each time the program is transferred from the server to the computer, the computer may execute processing in accordance with the received program.

### REFERENCE SIGNS LIST

- 10: Vehicle
- 11: Camera system
- 12: Display apparatus
- 13: Imaging apparatus
- 13a: Front camera
- 13b: Rear camera
- 13c: Left-side camera
- 13d: Right-side camera
- 14: I/O interface
- 15: AD converter
- 16: Display
- 17: Display apparatus controller
- 18: Dedicated line
- 19: Network
- 20: Optical system
- 21: Image sensor
- 22: Image processor
- 23: DA converter
- 24: I/O interface
- 25: Camera controller
- 100: Imaging apparatus
- 200: Display apparatus
- 300: First transmission path
- 400: Second transmission path
- 500: Third transmission path
- 1100: Controller
- 1200: Imaging unit
- 1300: First output interface
- 1400: Second output interface
- 1500: Acquisition unit
- 2100: Controller
- 2200: Acquisition unit
- 2300: Decoder
- 2400: Driver
- 2500: Display
- 2600: Communication controller

## Claims

1. An imaging apparatus comprising:
an image processor configured to generate a first digital image;
a DA converter configured to convert the first digital image to an analog image and output the analog image;
an I/O interface configured to receive reference information indicating an image quality characteristic value of a second digital image generated in accordance with the analog image; and
a controller configured to control operation of the image processor and to adjust an image quality characteristic of the first digital image so that the image quality characteristic value of the second digital image becomes closer to a predetermined target value.

2. The imaging apparatus of claim 1, wherein the target value is an image quality characteristic value of the first digital image.

3. The imaging apparatus of claim 1, wherein
the controller further receives other reference information indicating an image quality characteristic value of another second digital image generated in accordance with another analog image output by another imaging apparatus, and
the target value is the image quality characteristic value of the other second digital image.

4. The imaging apparatus of any one of claims 1 to 3, wherein adjustment of the image quality characteristic of the first digital image includes one of exposure adjustment and white balance adjustment.

5. The imaging apparatus of any one of claims 1 to 4, wherein
the first digital image is a test pattern image, and
the controller compares a particular area in the first digital image with the particular area in the second digital image.

6. The imaging apparatus of claim 5, wherein the particular area is an area including a predetermined boundary portion in the test pattern image.

7. The imaging apparatus of claim 5 or 6, wherein the I/O interface outputs information designating the particular area.

8. The imaging apparatus of any one of claims 5 to 7, wherein the controller compares color information of the particular area in the first digital image with color information of the particular area in the second digital image.

9. An imaging system comprising:
an imaging apparatus configured to generate a first digital image, convert the first digital image to an analog image, and output the analog image; and
a display apparatus configured to receive the analog image, convert the analog image to a second digital image, and output reference information indicating an image quality characteristic value of the second digital image to the imaging apparatus, wherein
the imaging apparatus adjusts an image quality characteristic of the first digital image so that the image quality characteristic value of the second digital image becomes closer to a predetermined target value.

10. A vehicle comprising:
an imaging apparatus configured to generate a first digital image, convert the first digital image to an analog image, and output the analog image, and a display apparatus configured to receive the analog image, convert the analog image to a second digital image, and output information indicating an image quality characteristic value of the second digital image to the imaging apparatus, wherein
the imaging apparatus adjusts an image quality characteristic of the first digital image so that the image quality characteristic value of the second digital image becomes closer to a predetermined target value.
